# EUROPÄISCHE PATENTANMELDUNG

(11) **EP 1 598 682 A2**
(43) Veröffentlichungstag der Anmeldung: **23.11.2005**
(21) Anmeldenummer: 05009676.7
(22) Anmeldetag: 03.05.2005
(51) Int. Cl.: G02B 6/00, F21S 8/00, A21B 3/10, F24C 15/00, F21V 33/00

(54) **Faseroptische Vorrichtung zur Innenbeleuchtung von Küchen und Hausgeräten**

(30) Priorität: 19.05.2004 DE 102004025326
(71) Anmelder: Schott AG, 55122 Mainz (DE)
(72) Erfinder: Gaydoul, Ekkehard, 64401 Gross-Biberbau (DE); Sieben, Sylvia, 55268 Nieder-Olm (DE)
(74) Vertreter: Schweiger, Martin

(57) **Zusammenfassung**

Die Erfindung betrifft eine faseroptische Vorrichtung (11) zur Innenbeleuchtung von Küchen- und Hausgeräten, vorzugsweise für Back- und Kühlgeräte (1) für die industrielle Nutzung, mit einem von Innenwänden umgebenen Geräteinnenraum (3) mit zumindest einer Nutzungsebene, wobei die faseroptische Vorrichtung (11) Lichteintrittsenden (14) und Lichtaustrittsenden (15) aufweisende lichtleitende Fasern umfasst und wobei die Lichteintrittsenden (14) wenigstens einer Lichtquelle (12) zugeordnet sind, welche vom Nutzungsbereich des Geräteinnenraums (3) entfernt angeordnet ist.

Die erfindungsgemäße Lösung wird dadurch bereitgestellt, dass die Glasfasern der faseroptischen Vorrichtung (11) zu flexiblen Faserbündeln (13) mit kleinen Biegeradien zusammengefasst sind, dass die Faserbündel (13) von der Lichtquelle (12) zu den Innenwänden (3) sind und dass die Lichtaustrittsenden (15) der Faserbündel (13) zur gleichmäßigen Ausleuchtung des Innenraums (2) auf den Innenwänden (3) verteilte punktförmige Leuchtstellen (21) bilden.

Wesentliche Vorteile sind unter anderem, dass die Lichtquelle (12) unabhängig von den Leuchtstellen (21) im Gerät (1) angeordnet werden können, d.h. entfernt von Hitze- bzw. Kältebereichen bei Backofen bzw. Kühlschrank, dass die faseroptische Vorrichtung (11) als Modul leicht einbaubar serienmäßig hergestellt werden kann, dass die Geräte (1) einfacher zu warten und zu reinigen sind und die Geräteinnenbeleuchtung durch gleichmäßiges Ausleuchtung verbessert wird.

## Beschreibung

Die Erfindung betrifft eine Faseroptische Vorrichtung zur Innenbeleuchtung von Küchen- und Hausgeräten, vorzugsweise für Back- und Kühlgeräte für die industrielle Nutzung, mit einem von Innenwänden umgebenen Geräteinnenraum mit zumindest einer Nutzungsebene, wobei die faseroptische Vorrichtung Lichteintrittsenden und Lichtaustrittsenden aufweisende lichtleitende Fasern umfasst und wobei die Lichteintrittsenden wenigstens einer Lichtquelle zugeordnet sind, welche vom Nutzungsbereich des Geräteinnenraums entfernt angeordnet ist.

Die Geräte, für deren Innenräume die Beleuchtung vorgesehen ist, weisen eine aus Innenwänden bestehende Innenwandung und ein Gehäuse auf, zwischen denen ein Montageraum liegt, in denen Aggregate, elektronische und mechanische Bauteile Platz finden. Als Geräte kommen dabei insbesondere Gar-, Back- und Kühlgeräten in Frage. Bei diesen Geräten ist eine gewisse Dichtigkeit der Innenwände unbedingt erforderlich - bei Gar- und Backgeräten, wie Mikrowellengeräte und Backöfen, um zu verhindern, dass übermäßig Wärme in den Montageraum gelangt und Bauteile oder Kabel beschädigt werden; bei Kühlgeräten, um die Kühltemperatur im Innenraum energiesparsam aufrecht erhalten zu können.

Backrauminnenraumbeleuchtungen für Backöfen sind aus der DE-OS 3803717 bekannt. Dabei werden Glühlampen vom Backraum thermisch getrennt angeordnet, wobei das Licht der Glühlampen durch eine Glasfläche in den Innenraum der Backöfen gelangt. Die Glasflächen bestehen aus hitzebeständigem Glas, welches die im Backraum beim Backen entstehende Wärme von den Glühlampen entfernt hält. Bei bekannten Varianten von Backrauminnenraumbeleuchtungen sind die Glasflächen halbschalenförmig ausgebildet und werden auf einer oder mehreren der Innenwände des Backraums montiert. Dabei ist es möglich, dass die halbschalenförmige Glasfläche eine oder mehrere der vorgesehenen Glühlampen abdeckt. Alternativ ist bekannt, dass in den Innenwänden des Backraums Beleuchtungsnischen ausgeformt sind, in welchen die vorgesehene Anzahl an Glühlampen aufgenommen ist und welche durch entsprechend geeignete Glasflächen abgedeckt und vom Backraum abgetrennt sind.

Als Nachteil hat sich bei den bekannten Backrauminnenbeleuchtungen erwiesen, dass die für die Beleuchtung vorgesehenen Glühlampen mit den entsprechenden Glasflächen im Verhältnis zum auszuleuchtenden Backraumbereich konstruktiv klein gehalten werden müssen, da die Mittel zur Beheizung auf den Innenwänden notwendigerweise gleichmäßig verteilt sein müssen und die Beleuchtungsmittel im Backraum leicht zugänglich und einfach zu putzen sein sollen. Dadurch ist es in der Regel nur möglich, den Backraum im Bereich der Leuchtquelle mit hoher Intensität auszuleuchten, wobei die anderen Bereiche eher schlecht ausgeleuchtet oder durch Backbleche oder Backraumteiler abgedunkelt werden. Dabei erweist sich die ungleichmäßige Ausleuchtung dann als besonders nachteilig, wenn es auf Sichtprüfung des Back- oder Garguts im Backbetrieb ankommt.

Aufgrund der im Ofeninnern herrschenden hohen Betriebstemperaturen (bis ca. 300°C) sowie der im Heiz- und Umluftmechanismus begründeten Vibrationen ist die Lebensdauer der hier zu verwendenden Lampen deutlich beschränkt. Diese Leuchtmittel müssen häufig getauscht werden, wofür beispielsweise Wartungsöffnungen an den äußeren Backofenseitenwänden vorzusehen sind. Falls mehrere Öfen Wand an Wand nebeneinander stehen sind diese Wartungsöffnungen schwer oder gar nicht zugänglich, so dass in der Regel die Backöfen nach dem Ausfall der ersten Lampenbestückung ohne Innenbeleuchtung mit entsprechenden Einschränkungen der Betriebsfähigkeit betrieben werden müssen.

Diese Nachteile können mit einer indirekten Beleuchtung mittels einer vom Nutzraum entfernt angeordneten Lichtquelle vermindert werden. Der Nutzungsraum ist beispielsweise bei Backöfen der Backofeninnenraum, bei Mikrowellengeräten der Garraum und bei Kühlgeräten der Kühlraum. Bei dieser Anordnung der Lichtquelle wird das Licht über Glasfasern zum Nutzungsraum geleitet.

Aus der DE 41 00 605 ist eine Beleuchtungseinrichtung für einen Backofeninnenraum bekannt, welche bei Backöfen mit mehreren Backebenen vorgesehen ist und mittels Auskopplungsköpfen erfolgt. Bei dieser Beleuchtungseinrichtung kann nur der Raum jeweils um den Auskopplungskopf gut ausgeleuchtet werden, wobei der Auskopplungskopf die konventionellen Glühlampen ersetzt. Hier ist es bereits konstruktiv aufwendig die Backrauminnenbeleuchtung bereitzustellen, da im Backofeninnenraum die Seitenwände beziehungsweise die Rückwand in der Regel bereits mit Führungs- und Befestigungsmitteln für Backbleche beziehungsweise Backraumteiler sowie Belüftungsmitteln für Umluftfunktionen des Backofens bestückt sind, so dass für die Auskopplungsköpfe kein Platz mehr ist.

Die zur Bereitstellung der Leuchtleistung der Glühlampen erforderlichen Dicken von Glasfaserbündel, sind in ihrer Ausbiegung beschränkt und werden zur Erreichung besserer Biegbarkeit lose im Montageraum verlegt. Dies hat den Nachteil, dass die Glasfasern bei Reparatur, Wartung oder bei Transport des Geräts ungeschützt Beschädigungen ausgesetzt sind und in Folge dessen, die Leuchtleistung vermindert wird. Außerdem ist eine Führung der Fasern in bewegte Gehäuseteile wie der Gerätetür wegen der Beschädigungsgefahr nicht möglich.

Darüber hinaus sind die üblicherweise mittig an den Seitenwänden des Innenraums angebrachten Lampen oder Auskopplungsköpfe zur Seitenbeleuchtung der Backebenen beziehungsweise die an der Rückwand befestigten Lampen oder Auskopplungsköpfe, wegen der Tiefe des Backraums und insbesondere auch wegen des relativ geringen Abstands zwischen den Backebenen, durch die Backofentüre nur schwer zugänglich und deshalb nur mühsam beziehungsweise nur mit speziellen Hilfsmitteln zu reinigen.

Aufgabe der Erfindung ist es daher eine verbesserte Geräteinnenraumbeleuchtung zur Verfügung zu stellen, welche die Nachteile des Standes der Technik vermeidet und insbesondere die Wartung und Reinigung des Geräts erleichtert und mit welcher es möglich ist, den Geräteinnenraum, insbesondere die einzelnen Nutzungsebenen optimal zu beleuchten, und einfach und kostengünstig vorzugsweise als vorgefertigtes Bauelement zur Herstellung des Geräts zur Verfügung gestellt werden kann.

Eine Lösung wird erfindungsgemäß dadurch bereitgestellt, dass die Glasfasern der faseroptischen Vorrichtung zu flexiblen Faserbündeln mit kleinen Biegeradien zusammengefasst sind, dass die Faserbündel von der Lichtquelle zu den Innenwänden führbar sind und dass die Lichtaustrittsenden der Faserbündel zur gleichmäßigen Ausleuchtung des Innenraums auf den Innenwänden verteilte punktförmige Leuchtstellen bilden.

Vorteil der erfindungsgemäßen Vorrichtung ist, dass die Lichtquelle vom Hitzebereich des Backofens oder vom Kühlbereich eines Kühlschranks durch die Verwendung von lichtleitenden Fasern getrennt angeordnet sind. Die lichtleitenden Fasern leiten das Licht von der Lichtquelle zu dem Punkt, wo der Back- oder Kühlraum von ihnen beleuchtet werden soll. Dabei spielt es keine Rolle, ob dieser in heißen Bereichen des Backofens oder im Gefrierfach des Kühlschranks liegt, da die lichtleitenden Fasern den üblichen Temperaturen dieser Geräte ohne weiteres aussetzbar sind. Zur Geräteinnenbeleuchtung sind somit konventionelle Leuchtquellen einsetzbar, welche kostengünstig sind und eine ausreichend hohe Lichtleistung aufweisen. Dabei ist die erfindungsgemäße Anordnung der Lichtquellen unabhängig von üblichen Einschränkungen bezüglich hoher oder niedriger Umgebungstemperaturen.

Es ist dabei vorgesehen, dass die Fasern von außen durch die Innenwände des Geräts durchgeführt werden oder eine entsprechende Lichtkopplung an den Innenwänden dafür einsetzbar ist, so dass das aus den Lichtaustrittsenden der Fasern gestrahlte Licht in das Innere des Geräts geleuchtet werden kann.

Dabei ist auch vorgesehen, dass Lichtquelle und Lichteintrittsenden der Fasern an leicht zugänglicher Stelle des Geräts angeordnet sind, vorzugsweise im vorderen Blendenbereich des Geräts. In vorteilhafter Weise wird hierdurch der Wartungsaufwand für den Austausch und die Reinigung der Lichtquellen verringert, da der Frontbereich des Geräts üblicherweise frei zugänglich ist. Besonders vorteilhaft hat sich die erfindungsgemäße Anordnung an Geräten erwiesen, welche in Arbeitshöhe beziehungsweise Arbeitsplatzhöhe angeordnet sind, da dabei die Wartung bequem im Stehen erfolgen kann. Hierzu kann die Lichtquelle auch im Bereich der Schaltermittel des Geräts angeordnet sein.

Als besonders zweckmäßig hat sich bei Backöfen außerdem erwiesen, dass Lichtquelle und Lichteintrittsenden der Fasern unterhalb des Backraums angeordnet sind. Bei dieser Anordnung wird die Lichtquelle in einem Bereich des Backofens angeordnet, welcher in der Regel am wenigsten durch die Backwärme aufheizt. Bei bekannten Backofenkonstruktionen wird der Bereich des Backofeninnenraums, welcher außerhalb des Backraums liegt, darüber hinaus von unten her belüftet, so dass dadurch die Betriebswärme der erfindungsgemäß angeordneten Lichtquelle durch die bodenseitige Belüftung nach oben abgeführt werden kann, was die Lebensdauer konventioneller Lichtquellen deutlich verlängert.

Bei Kühlgeräten ist der Bauraum für das Aggregat in der Regel im unteren Bereich angeordnet, so dass in diesem Bereich ausreichend Platz für eine zentrale Lichtquelle vorhanden ist.

Eine erfinderische Weiterbildung wird dadurch bereitgestellt, dass die faseroptische Vorrichtung aus einer Vielzahl von Einzelfasern und/oder Faserbündeln von Einzelfasern besteht, wobei die Einzelfasern der Faserbündel vorzugsweise einen Durchmesser zwischen 50 und 100 µm aufweisen. Es ist vorgesehen, dass das Licht von den Fasern zentral von einer oder mehreren Lichtquellen aufgenommen wird. Um zu ermöglichen, dass ausreichend Licht an verschiedene Stellen des Backraums geleitet werden kann, ist des Weiteren vorgesehen, eine ausreichend große Anzahl an Einzelfasern in einem Faserbündel zusammenzufassen und entsprechend von der Lichtquelle wegzuführen, wobei eine Vielzahl von Faserbündeln mit handhabbarem Durchmesser im Montageraum des Backofens verlegt werden und somit eine entsprechend große Zahl von Beleuchtungspunkten an den Innenwänden realisierbar sind, so dass eine optimale Ausleuchtung des Innenraums gewährleistet ist.

Der Einsatz der erfindungsgemäßen Faserstärken hat den Vorteil, dass die lichtleitenden Fasern oder Faserbündel ohne zusätzliche Maßnahmen im Backofeninneren verlegbar sind. Somit kann bei Anordnung einer oder mehrerer zentraler Lichtquellen eine Vielzahl von Faserbündeln an jede Stelle des Montageraums geführt werden.

Dabei ist erfindungsgemäß vorgesehen, dass die Faserbündel und/oder die Einzelfasern Biegeradien aufweisen, welche kleiner oder gleich 10 mm betragen. Somit wird gewährleistet, dass die Fasern auch problemlos durch enge Bereiche des Montageraums geführt werden können, so dass jede Stelle des Backraums beleuchtbar ist.

Des Weiteren ist erfindungsgemäß vorgesehen, dass die Faserbündel und/oder die Einzelfasern in einem Schutzmantel aus temperaturbeständigem, vorzugsweise biegsamen und/oder chemisch beständigem Material und/oder aus Geflechten aus temperaturbeständigem Material aufgenommen sind. In vorteilhafter Weise wird dadurch gewährleistet, dass die Fasern erschütterungsbeständig aufgenommen sind und es bei Montage, Transport beziehungsweise Wartung des Backofens im Montageraum nicht ohne weiteres zu Beschädigungen der Fasern kommen kann, insbesondere Faserbrüche die Lichtleistung der erfindungsgemäßen Vorrichtung verringern.

Erfindungsgemäß wird dies dadurch erreicht, dass der Schutzmantel aus extrudierbarem Kunststoff und/oder aus Geflechten aus temperaturbeständigem und/oder chemisch beständigem Kunststoff, Glas oder Metall besteht. Dabei können die Fasern beziehungsweise Faserbündel in einfacher und kostengünstiger Weise standardisiert hergestellt werden und mit der vorgesehenen Lichtstärke beziehungsweise Faseranzahl zusammengefasst werden.

Eine weitere Ausführungsform der erfindungsgemäßen Vorrichtung wird dadurch bereitgestellt, dass die Einzelfasern aus Glas und/oder hitzebeständigem lichtleitenden Kunststoff bestehen. Damit die Faserbündel das von der Lichtquelle ausgestrahlte Licht in optimaler Weise aufnehmen können, ist weiter vorgesehen, dass die Einzelfasern am Lichteintrittsende zu einem gemeinsamen Faserbündel, vorzugsweise mit einer Lichtaufnahmefläche zu Einkopplung des von der Lichtquelle ausgestrahlten Lichts zusammengefasst sind.

Des Weiteren ist vorgesehen, dass die Einzelfasern an den Lichtaustrittsenden zu Faserbündeln, vorzugsweise mit einem Durchmesser zwischen 3 und 6 mm, zusammengefasst sind. Die so zusammengefassten Einzelfasern ermöglichen es somit in vorteilhafter Weise, dass die erzeugten Beleuchtungspunkte an den Lichtaustrittsenden ausreichend hell sind. Die Beleuchtung einer Lichteintrittsfläche ist mithin einfacher zu realisierten, als die Lichteintrittsflächen mehrere Faserbündel oder Blocks von Faserbündeln.

Erfindungsgemäß ist dabei vorgesehen, dass die Lichtaustrittsenden den Innenwänden des Geräteraums zugeordnet sind, vorzugsweise in die Innenwände integriert und/oder durch die Innenwände durchführbar sind. Vorteil dieser Ausführungsform ist es, dass eine beliebige Verteilung der Beleuchtungspunkte auf den Geräteinnenwänden ermöglicht wird, wobei die Faserbündel jeweils zu den Stellen der Innenwände führbar sind, an denen die Lichtaustrittsenden befestigt oder durchgeführt werden sollen.

Dabei ist in vorteilhafter Weise erfindungsgemäß vorgesehen, dass die Lichtaustrittsenden der Faserbündel unmittelbar und/oder in verstellbaren Fassungen zur Einstellung der Leuchtrichtung in den Innenwänden aufgenommen sind. Damit ist es möglich, die Lichtaustrittsenden der Faserbündel individuell einzustellen, so dass Besonderheiten der Geräteinnenraumgestaltung bzw. -nutzung bei der Herstellung, Wartung oder Benutzung berücksichtigt werden können.

Des Weiteren ist vorgesehen, dass die Lichtaustrittsenden der Glasfasern zur Erhöhung der Temperaturbeständigkeit temperaturfest miteinander verklebt und/oder in temperaturfesten Hülsen aufgenommen sind. Hierdurch wird insbesondere vermieden, dass die Lichtaustrittsenden zerfasern oder abbrennen und die zu beleuchtenden Bereiche eines Backraums nach einiger Betriebszeit nur unzureichend ausgeleuchtet werden können. Darüber hinaus ist von Vorteil, dass die Faserbündel in einfacher Weise handhabbar sind und insbesondere einfach durch die Geräteinnenwände gesteckt oder mit Befestigungsmitteln daran befestigt werden können. Dabei wird das Risiko vermindert, dass durch die Lichtaustrittsenden an den Geräteinnenwänden Undichtigkeiten entstehen, was beispielsweise für Backöfen und Kühlschränke besonders wichtig ist.

Alternativ ist vorgesehen, dass die Lichtaustrittsenden der Einzelfasern zur Erhöhung der Temperaturbeständigkeit der Faserbündel durch Heißverschmelzung verschmolzen sind. Die Lichtaustrittsenden können auf diese Weise bis in den Backraum eines Backofens geführt werden. Von Vorteil ist dabei, dass die Fasern beziehungsweise Faserbündel ohne zusätzliche optische oder wärmeisolierende Mittel zur Backrauminnenbeleuchtung verwendet werden können.

Die beiden vorbeschriebenen Ausführungsformen der endbearbeiteten Lichtaustrittsenden weisen darüber hinaus den Vorteil auf, dass sie im eingebauten Zustand weniger verschmutzen und einfacher zu reinigen sind als unbearbeitete Lichtaustrittsenden.

In einer weiteren Ausführungsform der erfindungsgemäßen Vorrichtung ist vorgesehen, dass die Innenwände des Backraums einen oder mehrere Backraumteiler mit eigener faseroptischen Vorrichtung und Verbindungselementen zur Lichtkopplung mit der faseroptischen Vorrichtung des Backofens umfassen. In der Regel dienen Backraumteiler dazu, einzelne Backebenen des Backraums voneinander zu trennen, so dass die übereinander angeordneten Backebenen jeweils gleichmäßig von oben und unten beheizbar sind. Backraumteiler können fest im Backraum angeordnet oder zum Herausnehmen vorgesehen sein. Backraumteiler weisen üblicherweise eine obere beziehungsweise untere Heizfläche auf. In vorteilhafter Weise ist erfindungsgemäß vorgesehen, dass die Backraumteiler eine faseroptische Vorrichtung aufweisen, welche mit der faseroptischen Vorrichtung des Backofens koppelbar oder verbindbar ist, so dass das Licht der zentralen Lichtquelle in die faseroptische Vorrichtung des Backraumteilers geleitet wird, wobei die Lichtaustrittsenden durch die obere oder untere Heizfläche des Backraumteilers den Backraum beleuchten.

In einer weiteren Ausführungsform der erfindungsgemäßen Vorrichtung ist vorgesehen, dass Lichtaustrittsenden im Frontbereich des Geräts in den Innenwänden und/oder der Gerätetür integriert sind und dass das von diesen Lichtaustrittsenden ausgesendete Licht in den Geräteinnenraum gerichtet ist.

Wegen des geringen Raumbedarfs der Faserbündel im Montageraum und der Lichtaustrittsenden im Geräteinnenraum ist es in vorteilhafter Weise möglich, die erfindungsgemäßen Lichtaustrittsenden in der Gerätetüre oder im Frontbereich des Geräts an den Innenwänden anzuordnen, ohne dass diese bei der Benutzung des Geräts stören. Es kann somit erreicht werden, dass der Lichteinfall in den Geräteinnenraum von vorne und in Blickrichtung des Benutzers gerichtet erfolgt, so dass beispielsweise störende Spiegeleffekte an den Glasscheiben des Backofenfensters vermieden werden können, welche Sichtprüfungen des im Backraum befindlichen Back- oder Gargutes durch das Backofenfenster erschwert würden.

Des Weiteren bleibt der Geräteinnenraum optimal ausgeleuchtet, auch wenn die Gerätetüre geöffnet ist. Außerdem wird mit der erfindungsgemäßen Vorrichtung darüber hinaus vermieden, dass das Bedienpersonal durch die vordere Geräteinnenbeleuchtung geblendet wird. Es hat sich darüber hinaus auch als vorteilhaft erwiesen, dass die so angeordneten Lichtaustrittsenden wegen ihrer leichten Zugänglichkeit einfach zu reinigen sind.

Des Weiteren ist vorgesehen, dass das in den Geräteinnenraum ausgesendete Licht durch integrierte und/oder zusätzliche optische Elemente, vorzugsweise aus temperaturbeständigem Glas, an den Lichtaustrittsenden modulierbar ist. Die durch die Form der Lichtaustrittsenden vorgegebene Lichtausstrahlung kann im Bedarfsfall durch zusätzliche optische Elemente, vorzugsweise aus Glas, erfindungsgemäß so moduliert werden, dass jede Nutzungsebene von einem oder mehreren Lichtpunkten in den Innenwänden des Geräts gleichförmig ausgeleuchtet wird. Somit kann die Anzahl der Lichtaustrittsenden und somit die Faseranzahl für eine optimale Ausleuchtung des Geräts verringert werden und zusätzlich beispielsweise bei Backöfen erreicht werden, dass die Lichtaustrittsenden vor der unmittelbaren Einwirkung der Backraumwärme geschützt sind.

Zum einen kann somit bei Backöfen die Wärmebelastung der Lichtaustrittsenden reduziert werden. Zum anderen ist es möglich für die Reinigung des Geräteinnenraums entsprechend dem Material, aus dem die optischen Elemente bzw. Innenwände sind, auch konventionelle, insbesondere chemische, Reinigungsmittel beziehungsweise scheuernden oder kratzenden Reinigungsverfahren zur Reinigung des Backraums zuzulassen.

Darüber hinaus ist es mit den zusätzlichen optischen Elementen möglich, durch konstruktive Wahl besonderer Formen, Materialien beziehungsweise Beleuchtungsweisen die ästhetische Erscheinung des Geräteinnenraums zu verbessern. Erfindungsgemäß ist dabei vorgesehen, dass das Licht an Lichtaustrittsenden um die Lichtaustrittsachse kegelförmig und rotationssymmetrisch modulierbar ist.

Des Weiteren ist vorgesehen, dass jede Nutzungsebene des Geräts von mehreren Lichtaustrittsenden gleichförmig ausleuchtbar ist. So kann vermieden werden, dass Bereiche des Back- oder Gargutes durch Backbleche in benachbarten Backebenen oder durch Backraumteiler im Backofen abgedunkelt werden. Bei Kühlschränken kann insbesondere eine Abdunkelung durch das Kühlgut vermieden werden.

Als besonders vorteilhaft hat sich erwiesen, dass die Lichtquelle wenigstens eine Halogenreflektorlampe und/oder LED-Lichtquelle mit zumindest einer LED für jedes Faserbündel umfasst. Damit sind Lichtquellen einsetzbar, welche vibrations- und erschütterungsbeständig sind und welche darüber hinaus mit hoher Lebensdauer gegenüber konventioneller Glühlampenbeleuchtung auch die Wartungsintervalle an den Geräten reduzieren und diesbezügliche Kosten senken.

Des Weiteren ist die Lichteinkopplung derartiger Lichtquellen mit einfachen Mitteln realisierbar und es werden zur optimalen Beleuchtung des Geräteinnenraums bei konventionellen Gerätegrößen in der Regel nicht mehr als zwei Halogenreflektorlampen benötigt, so dass die erfindungsgemäße Geräteinnenbeleuchtung in vorteilhafter Weise kostengünstig und hinsichtlich des Energieverbrauchs sparsam erfolgen kann. LED-Lichtquellen können zu Leuchtkörpern zusammengefasst die Lichtaufnahmefläche zusammengefasster Faserbündel oder auch die Lichteintrittsflächen der einzelnen Faserbündel beleuchten. Es ist aber auch möglich, dass Gruppen von einzelnen LEDs für die Beleuchtung der Lichteintrittsflächen einzelner Faserbündel verwendet wird.

Als wesentliche Vorteile können zusammenfassend genannt werden, dass die Lichtquelle unabhängig von den Leuchtstellen im Gerät angeordnet werden können, d.h. entfernt von Hitze- bzw. Kältebereichen bei Backofen bzw. Kühlschrank, dass die Vorrichtung als Modul leicht einbaubar serienmäßig hergestellt werden kann, dass die Geräte einfacher zu warten und zu reinigen sind und eine Verbesserung der Beleuchtung durch gleichmäßige Ausleuchtung des Geräteinnenraums erreicht wird.

Die Erfindung wird im Folgenden anhand der Zeichnung erläutert. Es zeigen :
- Figur 1: eine perspektivische Ansicht eines auf einer Seite offenen Gerätes mit erfindungsgemäßer faseroptischer Vorrichtung;
- Figur 2: eine einstellbare Fassung zur Aufnahme der Lichtaustrittsenden.

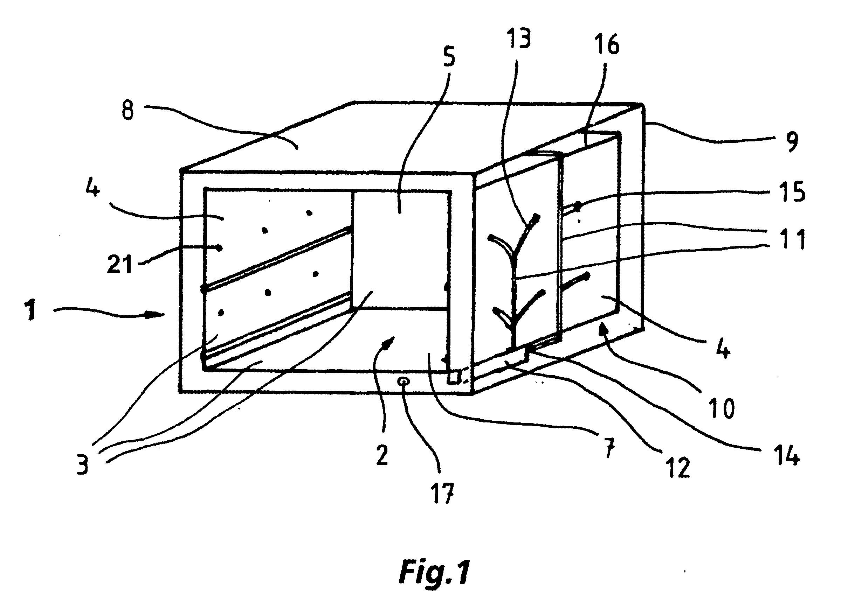

In Figur 1 ist ein erfindungsgemäßes Küchen- oder Hausgerät gezeigt, welches beispielhaft einen Backofen 1 darstellt. Der Backofen 1 weist einen Innenraum 2 auf, der durch die Innenwände 3 begrenzt ist.

Die Innenwände 3 umfassen Seitenwände 4 und eine Rückwand 5, welche der Türöffnung gegenüberliegt. In der Zeichnung ist die Türöffnung ohne die den Backofeninnenraum 2 abschließenden Backofentür dargestellt. Als oberen und unteren Abschluss weist der Innenraum 2 Decke 6 und Boden 7 auf.

Die Seitenwände 4 weisen Schiebeleisten 8 auf, welche zur Aufnahme von nicht dargestellten Backblechen dienen. Die Innenwände 3 sind in einem Gehäuse 9 angeordnet. Zwischen den Innenwänden 3 und dem Gehäuse 9 befindet sich der Montageraum 10. In dem Montageraum 10 sind verschiedene Aggregate, elektrische beziehungsweise mechanische Bauteile sowie Kabel für die elektrische Versorgung beziehungsweise Kanäle für Ansaug- oder Frasenluft angeordnet, welche nicht in der Zeichnung dargestellt sind.

Im Montageraum 10 ist die erfindungsgemäße faseroptische Vorrichtung 11 mit einer Lichtquelle 12 angeordnet. Die Lichtquelle 12 ist beispielhaft im unteren Teil des Montageraums 10 angeordnet. Die Erfindung umfasst jedoch jede Anordnung der Lichtquelle 12 im Montageraum 10, beispielsweise auch oberhalb des Backofeninnenraums 2 oder seitlich.

Die faseroptische Vorrichtung 11 weist des Weiteren eine Vielzahl von Faserbündeln 13 mit Lichteintrittsenden 14 und Lichtaustrittsenden 15 auf. Die Faserbündel 13 sind an ihren Lichteintrittsenden 14 zu wenigstens einer Lichteintrittsfläche zusammengefasst. Die Lichteintrittsfläche ist dabei unmittelbar oder über optische Elemente, wie beispielsweise Linsen, der Lichtquelle 12 zugeordnet.

Nach der Lichteintrittsfläche werden die Glasfasern in Strängen zusammengefasst und in Form von flexiblen Faserbündel 13 von der Lichtquelle 12 weggeführt. Die Faserbündel 13 weisen einen Durchmesser von 3 bis 6 mm auf, wobei die lichtleitenden Glasfasern Durchmesser zwischen 50 und 100 µm aufweisen. In gleicher Weise von der Erfindung umfasst sind Faserbündel aus hitzebeständigem lichtleitenden Kunststofffasern.

Von Vorteil ist dabei, dass die Faserbündel 13 somit ohne weiteres biegbar sind und Biegeradienenten realisiert werden, welche kleiner oder gleich 10 mm sind. Dadurch ist es möglich die Faserbündel 13 flexibel im Montageraum 10 auch an Stellen mit geringen Platz beispielsweise an Aggregaten vorbei oder über Kanten 16 zu verlegen, welche durch zwei aufeinanderstoßende Innenwände 3 gebildet sind.

Die Lichtaustrittsenden 15 bilden die zu den Lichteintrittsenden 14 entgegengesetzten Enden der Faserbündel 13. Die Lichtaustrittsenden 15 sind den Innenwänden 3 zugeordnet, wobei jedes Lichtaustrittsende 15 durch die zugehörige Innenwand 3 durchgeführt oder in diese integriert ist beziehungsweise mit Befestigungsmitteln an der Innenwand 3 befestigt ist. Dabei sind die Lichtaustrittsenden 15 in den Backofeninnenraum 2 gerichtet, so dass dieser in einem Teilraum von dem Licht ausgeleuchtet wird, dass an dem entsprechenden Lichtaustrittsende 15 ausgestrahlt wird. Somit ist eine gleichmäßige Ausleuchtung des Backofeninnenraums 2 mit auf den Innenwänden 3 verteilten punktförmige Leuchtstellen 21 in vorteilhafter Weise möglich, wobei die Leuchtstellen 21 von den Lichtaustrittsenden 15 gebildet werden.

Die Faserbündel 13 beziehungsweise die Einzelfasern sind in einem Schutzmantel aus temperaturbeständigem, vorzugsweise biegsamen sowie chemisch beständigem Material aufgenommen. Erfindungsgemäß ist ebenfalls vorgesehen, dass der Schutzmantel aus temperaturbeständigem Material besteht, damit eventuell auftretende hohe Temperaturen im Montageraum 10 die Faserbündel 13 nicht beschädigen können. Der Schutzmantel ist vorzugsweise aus extrudierbarem Kunststoff beziehungsweise aus Geflechten aus temperaturbeständigem beziehungsweise chemisch beständigem Kunststoff, Glas oder Metall hergestellt.

Die Lichtaustrittsenden der Faserbündel sind unmittelbar in den Innenwänden aufgenommen. Hierzu sind die Lichtaustrittsenden 15 der Glasfasern zur Erhöhung der Temperaturbeständigkeit temperaturfest miteinander verklebt beziehungsweise in temperaturfesten Hülsen aufgenommen. Des Weiteren können die Lichtaustrittsenden 15 der Einzelfasern zur Erhöhung der Temperaturbeständigkeit der Faserbündel 13 durch Heißverschmelzung an den Lichtaustrittsenden 15 verschmolzen sein.

Erfindungsgemäß ist auch vorgesehen, dass die Glasfasern in verstellbaren Fassungen zur Einstellung der Leuchtrichtung aufgenommen sind, wobei die Fassungen aus hitzebeständigem Material hergestellt sind. Die Fassungen ermöglichen es, dass die Leuchtrichtung individuell einstellbar ist und an die konstruktiven Gegebenheiten angepasst werden können. Auch kann der Benutzer des Backofens die Leuchtrichtung nach seinen Wünschen einstellen.

Besonders vorteilhaft hat sich erwiesen, dass die Lichtaustrittsenden 15 im Frontbereich des Backofens 1 in den Innenwänden 3 beziehungsweise der Gerätetür integriert sind. Dabei werden die Lichtaustrittsenden 15 so gerichtet, dass das ausgesendete Licht in den Backofeninnenraum 2 gerichtet ist. Zur Durchführung der Faserbündel in die Backofentür ist im Frontbereich eine Öffnung 17 im Gehäuse 9 vorgesehen.

Damit die Backebenen, welche durch die verschiedenen Schiebeleisten 8 für die Backbleche festgelegt sind, optimal ausgeleuchtet sind, sind in den Seitenwänden 4 des Backofens 1 mehreren Lichtaustrittsenden 15 gleichförmig nebeneinander angeordnet.

Die Lichtquelle 12 kann erfindungsgemäß durch eine Halogenreflektorlampe beziehungsweise eine LED-Lichtquelle ausgestaltet sein. Bei einer LED-Lichtquelle hat sich auch als vorteilhaft erwiesen, dass jedes Faserbündel mit zumindest einer LED am Lichteintrittsende 14 beleuchtet wird. Somit sind große Lichtleistungen an den Lichtaustrittsenden 15 erreichbar.

Die Lichtquelle 12 ist in der Zeichnung beispielhaft im vorderen Bereich des Gehäuses 9 vorzugsweise durch eine verschließbare Öffnung 16 zugänglich. Somit können in vorteilhafter Weise Wartungsarbeiten an der Lichtquelle 12 am eingebauten Gerät vorgenommen werden.

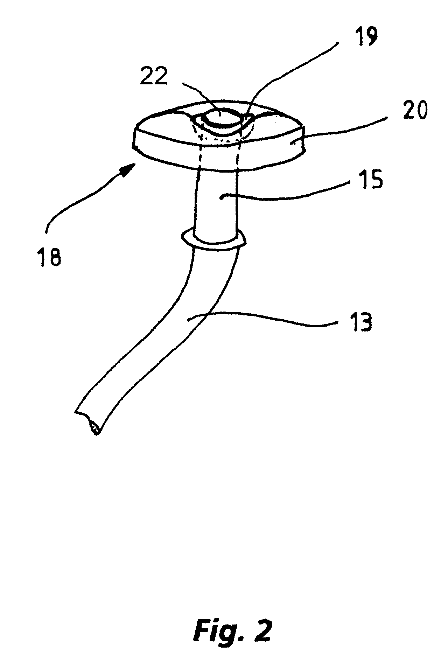

In Figur 2 ist beispielhaft für andere Methoden für die Integrierung, Durchführung oder Befestigung der Lichtaustrittsenden 15 eine einstellbare Fassung 18 dargestellt. Die Lichtaustrittsenden 15 sind dabei fest in einem bewegbaren Teil 19 der Fassung 18 aufgenommen. Der bewegbare Teil 19 der Fassung 18 kann in dem für die Befestigung an den Innenwänden 3 vorgesehenen Befestigungsteil 20 in einem bestimmten Maß verdreht werden, so dass die Leuchtrichtung der Lichtaustrittsenden 15 um einen entsprechenden Winkel verstellbar ist. Vorzugsweise kann der bewegbare Teil 19 der Fassung 18 mit zusätzlichen optischen Elementen ausgestattet sein, so dass das Licht mit den optischen Elementen darüber hinaus modulierbar ist.

Die Glasfasern sind in einem Faserbündel 13 zusammengefasst, welches in einem Schutzmantel 22 aufgenommen ist, der aus temperaturbeständigem, vorzugsweise biegsamen beziehungsweise chemisch beständigem Material und/oder aus Geflechten aus temperaturbeständigem Material besteht.

### Bezugszeichenliste

- 1: Backofen
- 2: Backofeninnenraum
- 3: Innenwände
- 4: Seitenwände
- 5: Rückwand
- 6: Decke
- 7: Boden
- 8: Schiebeleisten
- 9: Gehäuse
- 10: Montageraum
- 11: Faseroptische Vorrichtung
- 12: Lichtquelle
- 13: Faserbündel
- 14: Lichteintrittsenden
- 15: Lichtaustrittsenden
- 16: Kanten
- 17: Öffnung
- 18: einstellbare Fassung
- 19: bewegbaren Teil der Fassung
- 20: Befestigungsteil der Fassung
- 21: Punktförmige Leuchtstelle
- 22: Schutzmantel

## Patentansprüche

1. Faseroptische Vorrichtung (11) zur Innenbeleuchtung von Küchen- und Hausgeräten, vorzugsweise für Back- und Kühlgeräte (1) für die industrielle Nutzung, mit einem von Innenwänden (3) umgebenen Geräteinnenraum (2) mit zumindest einer Nutzungsebene, wobei die faseroptische Vorrichtung (11) Lichteintrittsenden (14) und Lichtaustrittsenden (15) aufweisende lichtleitende Fasern umfasst und wobei die Lichteintrittsenden (14) wenigstens einer Lichtquelle (12) zugeordnet sind, welche vom Nutzungsbereich des Geräteinnenraums (2) entfernt angeordnet ist,
**dadurch gekennzeichnet,**
**dass** die Glasfasern der faseroptischen Vorrichtung (11) zu flexiblen Faserbündeln (13) mit kleinen Biegeradien zusammengefasst sind, dass die Faserbündel (13) von der Lichtquelle (12) zu den Innenwänden (3) führbar sind und dass die Lichtaustrittsenden (15) der Faserbündel (13) zur gleichmäßigen Ausleuchtung des Innenraums (2) auf den Innenwänden (3) verteilte punktförmige Leuchtstellen (21) bilden.

2. Faseroptische Vorrichtung (11) gemäß Anspruch 1,
**dadurch gekennzeichnet,**
**dass** die faseroptische Vorrichtung (11) aus einer Vielzahl von Einzelfasern und/oder Faserbündeln (13) von Einzelfasern besteht, wobei die Einzelfasern der Faserbündel (13) vorzugsweise einen Durchmesser zwischen 50 und 100 µm aufweisen.

3. Faseroptische Vorrichtung (11) gemäß Anspruch 2,
**dadurch gekennzeichnet,**
**dass** die Faserbündel (13) und/oder die Einzelfasern Biegeradien aufweisen, welche kleiner oder gleich 10 mm betragen.

4. Faseroptische Vorrichtung (11) gemäß einem der Ansprüche 2 oder 3,
**dadurch gekennzeichnet,**
**dass** die Faserbündel (13) und/oder die Einzelfasern in einem Schutzmantel (22) aus temperaturbeständigem, vorzugsweise biegsamen und/oder chemisch beständigem Material und/oder aus Geflechten aus temperaturbeständigem Material aufgenommen sind.

5. Faseroptische Vorrichtung (11) gemäß Anspruch 4,
**dadurch gekennzeichnet,**
**dass** der Schutzmantel (22) aus extrudierbarem Kunststoff und/oder aus Geflechten aus temperaturbeständigem und/oder chemisch beständigem Kunststoff, Glas oder Metall besteht.

6. Faseroptische Vorrichtung (11) gemäß einem oder mehreren der Ansprüche 1 bis 5,
**dadurch gekennzeichnet,**
**dass** die Einzelfasern aus Glas und/oder hitzebeständigem lichtleitenden Kunststoff bestehen.

7. Faseroptische Vorrichtung (11) gemäß einem oder mehreren der Ansprüche 1 bis 6,
**dadurch gekennzeichnet,**
**dass** die Einzelfasern am Lichteintrittsende (14) zu einem gemeinsamen Faserbündel, vorzugsweise mit einer Lichtaufnahmefläche zu Einkopplung des von der Lichtquelle (12) ausgestrahlten Lichts zusammengefasst sind.

8. Faseroptische Vorrichtung (11) gemäß einem oder mehreren der Ansprüche 1 bis 7,
**dadurch gekennzeichnet,**
**dass** die Einzelfasern an den Lichtaustrittsenden (15) zu Faserbündeln (13), vorzugsweise mit einem Durchmesser zwischen 3 und 6 mm, zusammengefasst sind.

9. Faseroptische Vorrichtung (11) gemäß einem oder mehreren der Ansprüche 1 bis 8,
**dadurch gekennzeichnet,**
**dass** die Lichtaustrittsenden (15) den Innenwänden (3) des Geräteinnenraums (2) zugeordnet sind, vorzugsweise in die Innenwände (3) integriert und/oder durch die Innenwände (3) durchführbar sind.

10. Faseroptische Vorrichtung (11) gemäß Anspruch 9,
**dadurch gekennzeichnet,**
**dass** die Lichtaustrittsenden (15) der Faserbündel (13) unmittelbar und/oder in verstellbaren Fassungen (18) zur Einstellung der Leuchtrichtung in den Innenwänden (3) aufgenommen sind.

11. Faseroptische Vorrichtung (11) gemäß einem oder mehreren der Ansprüche 1 bis 10,
**dadurch gekennzeichnet,**
**dass** die Lichtaustrittsenden (15) der Glasfasern zur Erhöhung der Temperaturbeständigkeit temperaturfest miteinander verklebt und/oder in temperaturfesten Hülsen aufgenommen sind.

12. Faseroptische Vorrichtung (11) gemäß einem oder mehreren der Ansprüche 1 bis 11,
**dadurch gekennzeichnet,**
**dass** die Lichtaustrittsenden (15) der Einzelfasern zur Erhöhung der Temperaturbeständigkeit der Faserbündel (13) durch Heißverschmelzung verschmolzen sind.

13. Faseroptische Vorrichtung (11) gemäß einem oder mehreren der Ansprüche 1 bis 12,
**dadurch gekennzeichnet,**
**dass** die Innenwände (3) des Geräteinnenraums (2) einen oder mehrere Backraumteiler mit eigener faseroptischen Vorrichtung und Verbindungselementen zur Lichtkopplung mit der faseroptischen Vorrichtung (11) des Geräts (1) umfassen.

14. Faseroptische Vorrichtung (11) gemäß einem oder mehreren der Ansprüche 1 bis 13,
**dadurch gekennzeichnet,**
**dass** Lichtaustrittsenden (15) im Frontbereich des Geräts in den Innenwänden (3) und/oder der Gerätetür integriert sind und dass das von diesen Lichtaustrittsenden (15) ausgesendete Licht in den Geräteinnenraum (2) gerichtet ist.

15. Faseroptische Vorrichtung (11) gemäß einem oder mehreren der Ansprüche 1 bis 14,
**dadurch gekennzeichnet,**
**dass** das in den Geräteinnenraum (3) ausgesendete Licht durch integrierte und/oder zusätzliche optische Elemente, vorzugsweise aus temperaturbeständigem Glas, an den Lichtaustrittsenden modulierbar ist.

16. Faseroptische Vorrichtung (11) gemäß einem oder mehreren der Ansprüche 1 bis 15,
**dadurch gekennzeichnet,**
**dass** jede Nutzungsebene des Geräts von mehreren Lichtaustrittsenden (15) gleichförmig ausleuchtbar ist.

17. Faseroptische Vorrichtung (11) gemäß einem oder mehreren der Ansprüche 1 bis 16,
**dadurch gekennzeichnet,**
**dass** die Lichtquelle (12) wenigstens eine Halogenreflektorlampe und/oder LED-Lichtquelle mit zumindest einer LED für jedes Faserbündel (13) umfasst.
